# EUROPEAN PATENT APPLICATION

(11) **EP 4 442 770 A1**
(43) Date of publication of application: **09.10.2024**
(21) Application number: 23166814.6
(22) Date of filing: 05.04.2023
(51) Int. Cl.: C09C 1/36, C09C 3/04, C09C 3/06

(54) **OPTIMIZATION OF TIO2 POST TREATMENT**

(71) Applicant: KRONOS INTERNATIONAL, Inc., 51373 Leverkusen (DE)
(72) Inventor: The designation of the inventor has not yet been filed

(57) **Abstract**

The present invention relates to a method for coating inorganic particles in an aqueous suspension with at least one coating substance, comprising the steps of a) heating the aqueous suspension of inorganic particles to a temperature in the range of from 30 to 95°C; b) adding a first watersoluble precursor of a coating substance to the aqueous suspension and curing the aqueous suspension in a temperature range of from 30 to 95°C at a pH in the range of from 3 to 10.5; d) wherein the temperature of the aqueous suspension during the overall coating process is set in the range of from 30 to 95°C and the pH of the aqueous suspension during the overall coating process is in the range of from 3.0 to 10.5; e) wherein the aqueous suspension passes during coating step b) at least one agitator wherein the at least one agitator provides an energy input of 1.6 kWh/m³ or less and has a rotational speed of 5900 rpm or less; and f) wherein the aqueous suspension is circulated at least during step b) by the at least one agitator in a circuit, wherein the circuit contains the at least one agitator and at least one vessel.

## Description

### Field of the invention

The invention concerns a method for coating inorganic particles in an aqueous suspension with at least one coating substance, coated inorganic particles and coated inorganic particle obtainable by the method according to the invention.

### Technological background of the invention

Finely divided inorganic solid particles are often surface coated to modify certain properties such as abrasion resistance, surface charge, dispersion properties, acid or light resistance. For example, US2885366 describes the application of a dense silica coating to substrate particles such as nickel or iron powder, glass fibers or titanium dioxide. Coloring and white pigments are regularly coated with various oxides and hydroxides (e.g. EP0130272A1).

Surface treatment (post-treatment) of inorganic particles, in particular TiOz pigments, usually takes place in the aqueous phase, depositing metal oxides, hydroxides, phosphates or similar compounds on the particle surface. The process is usually conducted as a batch process in a stirred vessel, as disclosed for example in GB1340045. Starting from an aqueous pigment particle suspension, corresponding metal salts are added in dissolved form as so-called precursor compounds. The pH of the suspension is then adjusted with alkaline or acidic substances so that the precursor compounds precipitate as oxides, hydroxides, etc.

For example, GB1340045 discloses a batch process for the surface coating of titanium dioxide pigment, wherein the pigment in a suspension is subjected to intense stirring in a stirred vessel for up to two hours, during which time the coating substances are added and precipitated.

However, due to the comparatively large volume of the stirred vessel and the limited stirring possibilities local concentration, pH, viscosity and temperature gradients occur during the addition of the precursor compounds, which affect the result of the coating of e.g. TiO₂ particles. The resulting coating is unevenly dense or thick. In addition, some of the coating substances are not fixed on the particle surface, but form flakes next to the particles. These flakes can no longer be removed from the suspension and have a detrimental effect on the optical properties of the pigments, e.g. on brightening capacity or tinting strength (TS).

In order to provide a better coating result mixing of the reaction mixture has been proposed. For example mixer using the rotor-stator-principle have been proposed. Applying this mixing equipment has the advantage that mixing is improved. However, high shear forces are applied to the inorganic particles during the coating process which has disadvantageous effects on the coating process leading to coated inorganic particles with non-uniform and rough coatings.

Hence, there is a need for an improved coating process which overcomes the aforementioned disadvantages.

### Object and brief description of the invention

It is the object of the invention to provide a method by means of which a smooth, uniform and continuous surface coating can be produced on solid inorganic particles. In particular, shearing of the post-treatment shells of the particles due to excessive shear forces should be avoided. Furthermore, applying mixer, in particular inline disperser, with rotor-stator principle should be avoided, either, especially at high viscosity of the aqueous suspension.

In a first aspect the object of the present invention is solved by a method for coating inorganic particles in an aqueous suspension with at least one coating substance, comprising, preferably consisting of, the steps of
a) heating the aqueous suspension of inorganic particles to a temperature in the range of from 30 to 95°C, preferably of from 70 to 95°C;
b) adding a first water-soluble precursor of a coating substance to the aqueous suspension and curing the aqueous suspension in a temperature range of from 30 to 95°C, preferably of from 70 to 90°C, at a pH range of from 3 to 10.5, preferably of from 7 to 10.5;
c) preferably adding a second water-soluble precursor of a coating substance different from the first water-soluble precursor to the aqueous suspension obtained in step b) and curing the aqueous suspension in a temperature range of from 30 to 95°C, preferably of from 35 to 90°C and more preferably of from 37°C to 83°C, at a pH in the range of from 3 to 8, preferably of from 4.5 to 8;
d) wherein the temperature of the aqueous suspension during the overall coating process is set in the range of from 30 to 95°C, preferably of from 35 to 95°C and more preferably of from 37°C to 95°C, and the pH of the aqueous suspension during the overall coating process is in the range of from 3.0 to 10.5, preferably of from 4.5 to 10.5;
e) wherein the aqueous suspension passes during coating step b), preferably coating steps b) and c), at least one agitator, wherein the at least one agitator provides an energy input of 1.6 kWh/m³ or less, preferably an energy input in the range of from 0.1 to 1.55 kWh/m³, more preferably of from 0.17 to 1.15 kWh/m³, and even more preferably of from 0.23 to 0.83 kWh/m³, and has a rotational speed of 5900 rpm or less, preferably a rotational speed in the range of from 100 to 5500 rpm, more preferably in the range of from 200 to 4000 rpm, and even more preferably in the range of from 300 to 3600 rpm; and
f) wherein the aqueous suspension is circulated at least during step b), preferably during steps b) and c), by the at least one agitator in a circuit,
wherein the circuit contains the at least one agitator and at least one vessel.

In a further aspect the present invention relates to coated inorganic particles,
wherein the post-treatment coating of the particles is 0.1 to 20 wt.%, preferably 1 to 15 wt.%, more preferably 2 to 10 wt.%, and even more preferably 3 to 8 wt.% with respect to the overall weight of the inorganic particles; and/or
wherein the sulfuric acid solubility is less than 8.0 wt.%, preferably in the range of from 0 to 8.0 wt.%, more preferably in the range of from 0.5 to 6.5 wt.%; and/or
wherein the HMG gloss (20°) is at least 67, preferably at least 68 and the HMG glossy haze is below 90, preferably below 80 and more preferably below 74; and/or
wherein the FFC value is at least 1.40, preferably in the range of from 1.40 to 2.50; and/or
wherein the BET is between 5 to 100 m²/g, preferably between 8 to 50 m²/g and more preferably between 10 to 25 m²/g.

In another aspect the present invention relates to coated inorganic particles obtainable by the inventive method.

Further advantageous embodiments of the invention are stated in the dependent claims.

### Figures

- Fig. 1:: Circuit of a device for carrying out the method according to a first embodiment;
- Fig. 2:: Circuit of a device for carrying out the method according to a second embodiment.

### Description of the invention

These and further aspects, features and advantages of the invention become apparent to the skilled person from a study of the following detailed description and claims. Each feature from one aspect of the invention may also be used in any other aspect of the invention. Further, of course, the examples contained herein are intended to describe and illustrate the invention, but not to limit it, and in particular, the invention is not limited to such examples.

Numerical ranges stated in the form "from x to y" include the values mentioned and those values that lie within the range of the respective measurement accuracy as known to the skilled person. If several preferred numerical ranges are stated in this form, of course, all the ranges formed by a combination of the different end points are also included.

All information disclosed in the following with regard to size, time, temperature, amount of components, concentration in % by weight (wt.%), pH value, etc. is to be understood as including all values that are within the range of the respective measurement accuracy known to the person skilled in the art. Unless otherwise stated, technical qualities of the various substances have been used in the examples.

The method according to the invention is based on an aqueous suspension of untreated inorganic solid particles, which are also referred to below as basic particles.

Suitable are finely divided inorganic solids with a particle size in the range of from 0.001 µm to 1 mm, preferably of from 0.1 to 1 µm, which are processed in aqueous suspensions, such as pigments (titanium dioxide, colour pigments, effect pigments, etc.), fillers, titanates, iron, nickel or other metallic particles.

Suitable coatings are oxides, hydroxides, phosphates and similar compounds of the known elements Si, Ti, Al, Zr, Sn, Mn, Ce and other elements. Here and in the following, "oxide" shall also be understood to mean the respective hydroxide or hydrous oxide. In particular, we are talking about inorganic coatings.

In a particular embodiment of the invention, untreated titanium dioxide particles (TiOz base particles), preferably untreated titanium dioxide pigment particles are used.

TiOz base particles can be prepared by the sulphate process or by the chloride process which are well known processes.

The TiOz base particles can have an anatase or rutile structure. Rutile is preferred.

Typically, the TiOz base particles are doped with known elements such as Al to improve the photostability of the TiOz pigment. For example, in the chloride process, such an amount of AlCl₃ is oxidized together with TiCl₄ so that the TiOz base particle has about 0.5 to 2.0 wt.% Al calculated as Al₂O₃. In the titanium dioxide production by the sulphate process, the hydrolyzed titanyl sulphate is mixed with annealing additives such as potassium hydroxide or phosphoric acid and then calcined. The TiOz base particle from the sulphate process usually contains about 0.2 to 0.3 wt.% K and 0.05 to 0.4 wt.% P, each calculated as oxide.

The untreated particles, in particular TiO₂-base particles, are mixed to an aqueous suspension. Usually, a dispersing agent is added to the suspension. Suitable dispersants are known to the skilled person. For example, sodium silicate or sodium hexametaphosphate are preferably used as dispersing agent in the deagglomeration of TiOz base particles in sand mills. The concentration of the dispersant is usually in the range of 0.05 to 5.0 kg/t TiOz.

Usually, the pH of the suspension is also adjusted depending on the particle type and dispersant. For example, in the deagglomeration of TiOz base particles from the chloride process, the pH is adjusted to values of about 9 to 12 or to values of about 2 to 5. The temperature of TiOz base particle suspensions is usually about 40 to 80°C.

Usually, the suspension is then deagglomerated, for example in agitator mills such as bead mills or sand mills or in ultrasonic mills.

When talking about energy input, this is understood to mean the agitating power P*h/V, where P is the electrical power of agitator, h is hour, and V is the volume.

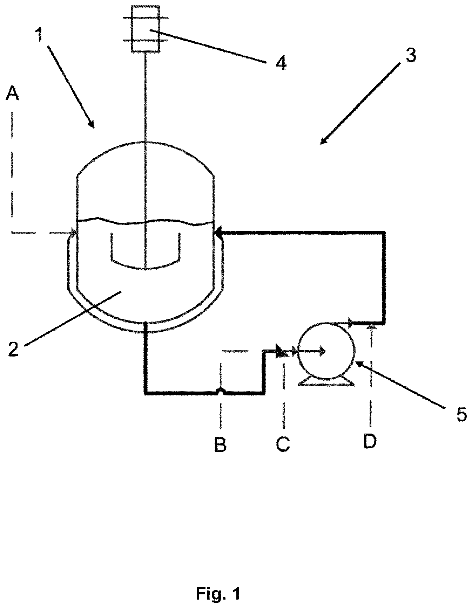

An embodiment of the process according to the invention for the surface coating (post-treatment) of inorganic particles is shown schematically in Fig. 1: According to the invention, the deagglomerated aqueous particle suspension 2 is conveyed (pumped) from a first vessel 1 in a circulation process around a closed circuit 3. A mixer 4 is located in the first vessel 1. The mixer 4 may be a high-performance agitator and may have a minimum peripheral speed of 15 m/s or a agitating power P*h/V of at least 10 W*h/m³. The mixer 4 is a paddle mixer. However, the mixer 4 can also be selected from the group consisting of blade stirrer, high-performance angled blade stirrer, toothed disk stirrer, anchor stirrer or jet mixer. A jet mixer enables intensive mixing on a macro and micro scale. Furthermore, toothed disk stirrers or high-performance angled blade stirrers are suitable.

Furthermore, an agitator 5 is installed in the circuit 3, which may be a pipeline mixer, more preferably an inline disperser or a centrifugal pump. The agitator 5 is arranged downstream of the first vessel 1 as seen in the direction of the aqueous suspension flowing through the circuit 3. The inlet of the agitator 5 is flow-conducting connected to the outlet of the first vessel, wherein the outlet of the agitator 5 is flow-conducting connected to the inlet of the first vessel 1 thus providing for an endless loop circulation of the aqueous particle suspension 2 inside the circuit 3. Thus, a circular flow process (CFP) may be established.

The first water-soluble precursor compound of the coating substances may be dosed into the vessel 1 (through an inlet, see the dashed line A), wherein the second water-soluble precursor may be metered into the circuit at a position different to that of first water-soluble precursor of a coating substance, here immediately upstream or downstream the at least one agitator 5 (through an inlet, see dashed lines B, C or D), especially in a dispersing head of an inline disperser (dashed line B) or into the nozzle before (dashed line C) or after the impeller of the inline disperser (dashed line D) in the case the at least one agitator is carried out as inline disperser. In this way, local concentration, pH, viscosity and temperature gradients in the suspension are minimized. It is important to note that the precursors may be added to the process at different locations of the system as well. Besides, they may also be added at the same position, Furthermore, pH probes (not shown) may be integrated into the circuit 3 and the first vessel 1.

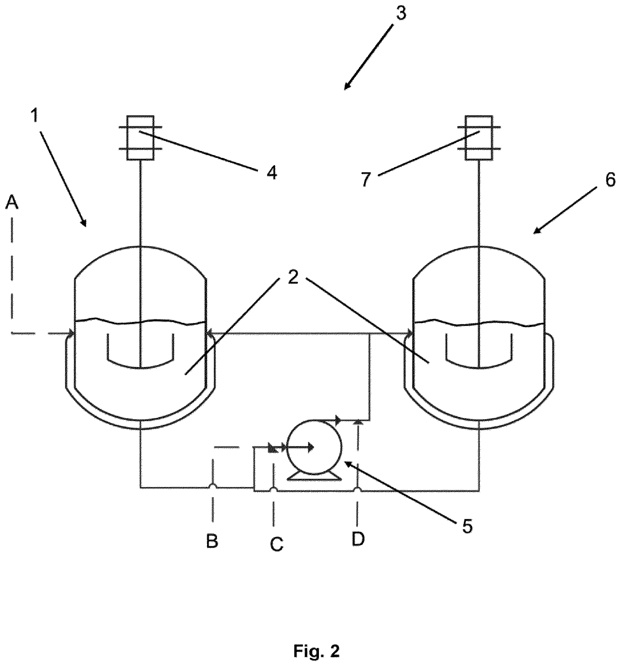

According to a second embodiment as shown in Fig. 2, which is a modification of the circuit 3 shown in Fig. 1, the circuit 3 contains a second vessel 6. The second vessel 6 may also comprise a mixer 7. First vessel 1 and second vessel 6 are both interconnected in series with each other in the circuit 3, wherein the at least one agitator 5 is arranged downstream the first vessel 1 and the second vessel 6 is arranged downstream the at least one agitator 5 in the circuit 3 as seen in reference to the flow direction of the aqueous suspension through the circuit 3. That means, that the outlet of the first vessel 1 is flow-conducting connected to the inlet of the agitator 5 and the inlet of the second vessel 6. The outlet of the second vessel 6 is in turn connected to the inlet of the first vessel 1. Thus, the aqueous solution 2 may be circulated by the at least one agitator 5 within the circuit 3 between the first and second vessel 1, 6 in a closed loop. According to another mode of the process the aqueous suspension is pumped through the agitator 5 when being pumped from the second vessel 6 to the first vessel 1. The process set up shown in Fig. 2 is also called pendulum process.

For coating the particles with silica sodium water glass or potassium water glass is usually used as a water-soluble precursor compound. Furthermore, according to the invention, organometallic compounds such as alkoxysilanes can also be used as precursor compounds for coating with SiOz. Silicon dioxide can be precipitated onto the particle surface as a porous coating or as a dense shell. It is preferred that this coating is a dense coating.

According to the invention, the particles can be coated with the amounts of silica usually used, for example with about 1 to 20 wt.% SiO₂, preferably 1.5 to 15 wt.% of SiO₂, for TiO₂ particles.

For coating with aluminium or aluminium oxide, water-soluble aluminium salts such as sodium aluminate, aluminium sulphate, aluminium chloride etc. are usually used as precursor compounds. Such compounds are known to the skilled person, in particular from the extensive patent literature on surface coating (post-treatment) of titanium dioxide.

According to the invention, the particles can be coated with the amounts of aluminium oxide usually used, for example with about 0.5 to 20 wt.% Al₂O₃, preferably 0.5 to 10 wt.% of Al₂O₃, for TiO₂ particles.

In a particular embodiment of the invention, a dense SiOz shell is precipitated onto the particles at a temperature in the range of from 30 to 95°C, preferably of from 70 to 90°C, more preferably of from 80 to 90°C, and the subsequent Al₂O₃ layer is precipitated onto the particles at a temperature in the range of from 30 to 95°C, preferably in the range of from 35 to 90°C and more preferably in the range of from 37°C to 83°C.

Following precipitation, the suspension is adjusted to a pH value of about 5 to 7, pumped off the at least one vessel 1, 6 or circuit 3 and the coated particles are separated from the suspension according to known procedures, washed if necessary, dried and finely ground. At the end of the process, the particles preferably have a pH value of 9.5 or less. Usually the pH value of the particles is above 6.0.

The at least one vessel being heated and agitated, that means a stirred curing vessel comprising the mixer.

The at least one agitator may be a pipeline mixer, more preferably an inline disperser or a centrifugal pump. Thus, a lower energy input is possible, thereby avoiding shearing of the readily coated particles in the aqueous solution.

The at least one agitator is not an agitator applying the rotor-stator-principle. This is important as this reduces the shear forces as well. It is emphasized that the at least one agitator does not refer to the stirrer, mixer or agitator of the vessel.

According to a preferred embodiment the at least one agitator does not comprise a stator being located in proximity to the rotor. Such an agitator cannot apply the rotor-stator-principle.

The first water-soluble precursor of a coating substance may be added directly to the at least one vessel, wherein the second water-soluble precursor is metered into the circuit at a position different to that of first water-soluble precursor of a coating substance.

The second water-soluble precursor may be metered into the circuit at a position outside the vessel and preferably immediately upstream or downstream the at least one agitator, especially in a dispersing head of an inline disperser or into the nozzle after the impeller of the inline disperser in the case the at least one agitator is carried out as inline disperser.

The first water-soluble precursor may also be metered into the circuit at a position outside the vessel and preferably immediately upstream or downstream the at least one agitator, especially in a dispersing head of an inline disperser or into the nozzle after the impeller of the inline disperser in the case the at least one agitator is carried out as inline disperser.

According to an embodiment the first water-soluble precursor of a coating substance and the second water-soluble precursor of a coating substance are added directly to the at least one vessel.

According to another embodiment the second water-soluble precursor is metered into the circuit at a position different to that of the first water-soluble precursor of a coating substance.

In a further embodiment the first and the second water-soluble precursor of a coating substance are metered into the circuit at the same position.

In another embodiment the first and the second water-soluble precursor of a coating substance are metered into the circuit at different positions.

According to a preferred embodiment the inorganic particles may be or comprise untreated titanium dioxide particles, preferably untreated titanium dioxide pigment particles as base particles.

According to another preferred embodiment the inorganic particles are pigment particles.

The first water-soluble precursor of a coating substance may be a silica containing precursor, preferably water glass, or an alumina containing precursor, preferably sodium aluminate.

The whole coating process, in other words the circulation in the circuit, may last between 1 to 6 hours, preferably 1.5 to 5 hours, and more preferably 2 to 4 hours in total.

The circulation rate per hour may be 1 to 40, preferably 2 to 35, and more preferably 15 to 30. That means that the whole volume of the aqueous solution in the circuit is circulated 1 to 40 times per hour through the at least one agitator.

In one embodiment the circulation rate per hour is 1 to 20, preferably 1 to 15 and more preferably 2 to 10.

By circulating the aqueous suspension mixing of all components is improved.

In a further aspect the present invention relates to coated inorganic particles, wherein the post-treatment coating of the particles is 0.1 to 20 wt.%, preferably 1 to 15 wt.%, more preferably 2 to 10 wt.%, and even more preferably 3 to 8 wt.% with respect to the overall weight of the inorganic particles; and/or wherein the sulfuric acid solubility is less than 8.0 wt.%, preferably in the range of from 0 to 8.0 wt.%, more preferably in the range of from 0.5 to 6.5 wt.%; and/or wherein the HMG gloss (20°) is at least 67, preferably at least 68, more preferably in the range of from 68 to 200, and the HMG glossy haze is below 90, preferably below 80, more preferably below 74, and even more preferably in the range of from 9 to 74; and/or wherein the FFC value is at least 1.40, preferably in the range of from 1.40 to 2.50; and/or wherein the BET is between 5 to 100 m²/g, preferably between 8 to 50 m²/g and more preferably between 10 to 25 m²/g.

It should be understood that any feature and/or aspect discussed above in connections with the method according to the invention apply by analogy to the coated inorganic particles described herein.

Preferably the coated inorganic particles comprise at least one coating layer and more preferably of at least two coating layers.

According to a preferred embodiment the coated inorganic particles comprise three or four coating layers.

It is preferred that the coated inorganic particles have an isoelectric point, leP, of 5.5 or more, preferably of 6.0 or more and more preferably have an leP in the range of from 6.0 to 9.0. A higher isoelectric point is an indicator that layer formation is improved, that is, that a more even hull is formed.

According to a preferred embodiment one coating layer is a silica containing layer or an alumina containing layer.

According to another preferred embodiment the coated inorganic particles comprise at least two coating layers, whereby one layer is a silica containing layer and another layer is an alumina containing layer.

According to a further preferred embodiment the coated inorganic particles are pigment particles.

According to another preferred embodiment the base particles of the coated inorganic particles are untreated titanium dioxide particles, preferably untreated titanium dioxide pigment particles.

Further preferred the base particles are doped particles, and preferably doped titanium particles.

In another aspect of the invention the invention concerns coated inorganic particles according to the invention obtainable by the inventive method.

It should be understood that any feature and/or aspect discussed above in connections with the method and coated inorganic particles according to the invention apply by analogy to the coated inorganic particles obtainable be the inventive method described herein.

### EXAMPLE SECTION

The invention is explained in more detail below on the basis of examples, although these are not to be interpreted as a limitation.

### Test methods

### Sulfuric acid solubility

A suspension of 500 mg TiOz pigment in 25 ml concentrated sulfuric acid (96 wt.%) is kept for 60 min at 175 °C. After filtration the amount of TiOz in the filtrate is determined using ICP Atomic Emission Spectroscopy. The lower the concentration of dissolved TiO₂, the more dense the SiOz coating on the pigment surface.

### Determination of FFC

The Ring Shear Tester RST-XS from the company Dr. Dietmar Schulze in Wolfenbüttel, Germany, was used. A titanium dioxide sample was sieved using a sieve with a 1 mm mesh size to remove coarse material. Then, a shear-cell was charged with 100 g of the sieved sample which was analyzed by three measurements under different pressures, namely under 2,400 Pa, 3,600 Pa and 4,800 Pa. The arithmetic mean is calculated from the respective FFC values.

### Determination of HMG Gloss at 20 °C

The pigment is dispersed in Alkydal F26 X 60% from Bayer in an automatic muller. A sample of the suspension with a PVC of 27% is applied to a glass plate with a film applicator. After the drawdown has dried, the gloss (20 °C) is measured with a haze-gloss reflectometer.

The coating of titanium dioxide particles can be visualized with the help of transmission electron microscopy (TEM).

### Determination of HMG Glossy Haze

The pigment is dispersed in Alkydal F26 X 60% from Bayer in an automatic muller. A portion of the suspension is drawn down on a glass plate with an applicator. After drying the gloss ( 20° ) and the gloss haze (20° +/- 1.8° ) of the film are determined.

Equipment: Automatic muller (Engelsmann, Ludwigshafen; plate diameter 25 cm, loading one 1.25 kg and two 2.5 kg weights)

### Determination of BET

The BET surface is determined/measured with a Tristar 3000 from the company Micromeritics based on the static-volumetric principle according to DIN 66 131.

### Examples

The results of the Examples are shown in Table 1.

### Examples 1: Pendulum-process

### Inventive Example 1a (IE1a)

The TiOz suspension (base material obtained from the chloride process; 210 L with a solid content of 36.2 wt.%) is pumped alternately in a pendulum process into two reaction vessels, each vessel having a volume of 650 L, heated via a jacket heating system and thereby heated to a temperature of 80°C. The reaction vessels are equipped with a paddle mixer with a rotation speed of 24 rpm. The TiOz suspension is circulated 30 to 40 times per hour (Circulation: 6-8 m³/h which equals 30-40 times per hour is circulated) between the two reaction vessels. The pH value at the start is 10. 4 wt.% SiOz with respect to the titanium dioxide, obtained from a sodium silicate (water glass) source, are added within 30 min. Via the addition of 0.5 wt.% titanyl chloride the pH value is lowered to 7.5 within 90 minutes. At constant pH 2 wt.% Al₂O₃ with respect to the titanium dioxide, from the source sodium aluminate, is added within 30 minutes. The final pH value is adjusted with HCl to 5.2. All post-treatment chemicals are added to the dispersing head of the inline disperser with a low shear energy input. The rotational speed is 3500 rpm (12 kW) and the energy input is 1.5 kWh/m³. The sulfuric acid solubility, which is measure for the density of the surface coating, is 5.3 wt.%. The HMG gloss at 20 °C is 72 and the HMG glossy haze is 36.

### Comparative Example 1 (CE1)

CE1 was performed using the same treatment as described under IE1a with the difference that 350 L TiO₂ suspension with a solid content of 36.2 wt.% were applied and that an inline disperser with high shear input and rotor-stator principle (6000 rpm, 9.5 kW) was used. The sulfuric acid solubility was 6.6 wt.%. The HMG gloss (20°) was 70, the HMG glossy haze was 75. The FFC-value, which characterizes the flowability and thus conveyability of the pigment, was 1.61.

### Comparative Example 2 (CE2)

In a conventional batch treatment the sulfuric acid solubility is 8.7 wt.% with the same addition times, quantities and temperatures as mentioned for IE1a. Since mixing is less intensive in the batch process, stirring times of 15-30 minutes are applied between chemical additions, which increases the total treatment time. The HMG gloss (20°) was 66, the HMG glossy haze was 204. The FFC-value was 1.57.

### Inventive Example 1b (IE1b)

IE1b was performed using the same treatment as described under IE1a with the difference that the rotational speed of the inline disperser was 2000 rpm (3.5 kW). SiO₂ addition was performed at 90°C and Al₂O₃ addition at 40°C. The sulfuric acid solubility was 4.3 wt.%. The addition of hydrochloric acid at the fixed-pH addition of the aluminate takes place in the nozzle after the impeller of the inline disperser. The isoelectric point is higher compared to the previous examples, being 7.1, which is a clear indicator for a more distinct coating formation, wherein the aluminate forms more of a second coating than a mixed coating. The HMG gloss (20°C) is 72 and the HMG glossy haze is 34. This clearly demonstrates that less post-treatment chemicals are precipitated beside the pigment. The FFC-value is 1.69.

### Examples 2: Continuous Flow Process

### Inventive Example 2a (IE2a)

The TiO₂ suspension is treated in the continuous flow process in a reaction vessel and is circulated using an inline disperser (8-10 m³/h). The pH controlling substance was metered into the dispersing head of the inline disperser. The post-treatment chemicals are metered into the reaction vessel. The temperatures, the addition times and the addition quantities are identical to IE1a with the alteration that between addition times additional stirring times of 15 min each were inserted. The rotational speed of the inline disperser was 2000 rpm (3.5 kW). The isoelectric point was at 6, similar to the one of the batch process of CE2. The sulfuric acid solubility was 1.8 wt.% and the FFC-value was 1.77. The HMG gloss (20°C) was 71 and the HMG glossy haze was 36.

### Inventive Example 2b (IE2b)

IE2b was performed similar to IE2a. All post-treatment chemicals and pH controlling substances were metered into the dispersing head, hydrochloric acid was metered into a nozzle before the impeller. The sulfuric acid solubility was 5.4 wt.% and the FFC-value was 1.72. The HMG gloss (20°C) was 69 and the HMG glossy haze was 72.

**Table 1: Examples**

| **Ex.** | **rpm** | **Energy Input kWh/m³** | **IeP** | **Temp SiO₂ [°C]** | **Temp Al₂O₃ [°C]** | **H₂SO₄ Solub. [wt.%]** | **HMG Gloss (20°C)** | **HMG Glossy Haze** | **FFC** | **BET [m²/g]** |
|---|---|---|---|---|---|---|---|---|---|---|
| CE1 | 6000 | 0.95 | 5.6 | 80 | 60-80 | 6.6 | 70 | 75 | 1.61 | 21.5 |
| CE2 | -- | -- | 6 | 80 | 60-80 | 8.7 | 66 | 204 | 1.57 | 17.6 |
| IE1a | 3500 | 1.5 | 5.6 | 80 | 60-80 | 5.3 | 72 | 36 | 1.44 | 19.2 |
| IE1b | 2000 | 0.44 | 7.1 | 90 | 40 | 4.3 | 72 | 34 | 1.69 | 17.6 |
| IE2a | 2000 | 0.44 | 6 | 80 | 60-80 | 1.8 | 71 | 36 | 1.77 | 19.4 |
| IE2b | 2000 | 0.44 | 6 | 80 | 60-80 | 5.4 | 69 | 72 | 1.72 | 19.3 |

Applying the pendulum or CFP process and using an agitator such as an inline disperser, which disperses the chemicals by means of a vacuum, improves the properties of the obtained inorganic coated particles as mixing is improved. By using an inline disperser without a stator as the at least one agitator good mixing is nevertheless achieved even at high viscosities of the suspension.

As can be derived from Table 1 by reducing the stirring speed results in improved layer formation as can i.a. be derived from the isoelectric point. More uniform shells of the pigments are obtained as shown by the reduction the sulfuric acid solubility. In particular the combination of the properties of H₂SO₄ solubility, HMG Gloss (20°C) and HMG Glossy Haze is advantageously improved. HMG gloss is increased (20°) and HMG glossy haze is decreased at the same time.

The flowability of the aqueous solution is also increased if the treatment is conducted appropriately.

Besides, avoiding the use of a stator results in a reduction in shear forces during particle post-treatment, resulting in less shearing of the post-treatment shells.

Finally, the process according to the invention saves a considerable amount of time compared to the post-treatment according to the batch process.

### ITEMS:

1. Method for coating inorganic particles in an aqueous suspension (2) with at least one coating substance, comprising the steps of
   a) heating the aqueous suspension of inorganic particles to a temperature in the range of from 30 to 95°C, preferably of from 70 to 95°C;
   b) adding a first water-soluble precursor of a coating substance to the aqueous suspension (2) and curing the aqueous suspension (2) in a temperature range of from 30 to 95°C, preferably of from 70 to 90°C, at a pH in the range of from 3 to 10.5, preferably of from 7 to 10.5;
   c) preferably adding a second water-soluble precursor of a coating substance different from the first water-soluble precursor to the aqueous suspension (2) obtained in step b) and curing the aqueous suspension (2) in a temperature range of from 30 to 95°C, preferably of from 35 to 90°C and more preferably of from 37°C to 83°C, at a pH in the range of from 3 to 8, preferably of from 4.5 to 8;
   d) wherein the temperature of the aqueous suspension (2) during the overall coating process is set in the range of from 30 to 95°C, preferably of from 35 to 95°C and more preferably of from 37°C to 95°C, and the pH of the aqueous suspension during the overall coating process is in the range of from 3.0 to 10.5, preferably of from 4.5 to 10.5;
   e) wherein the aqueous suspension (2) passes during coating step b), preferably coating steps b) and c), at least one agitator (5), wherein the at least one agitator (5) provides an energy input of 1.6 kWh/m³ or less, preferably an energy input of from 0.1 to 1.55 kWh/m³, and has a rotational speed of 5900 rpm or less, preferably a rotational speed in the range of from 100 to 5500 rpm, and more preferably in the range of from 200 to 4000 rpm; and
   f) wherein the aqueous suspension (2) is circulated at least during step b), preferably during steps b) and c), by the at least one agitator (5) in a circuit (3),
      wherein the circuit (3) contains the at least one agitator (5) and at least one vessel (1, 6).
2. Method according to item 1, wherein the circuit (3) contains at least two vessels (1,6), a first vessel (1) and a second vessel (6), both being interconnected in series with each other, wherein the at least one agitator (5) is arranged downstream the first vessel (1) and the second vessel (6) is arranged downstream of the at least one agitator (5) in the circuit (3) as seen in reference to the flow direction of the aqueous suspension (2) through the circuit (3).
3. Method according to item 1 or 2, wherein the at least one vessel (1, 6) being a heated and agitated curing vessel.
4. Method according to any one of the items 1 to 3,
   wherein the at least one agitator (5) provides an energy input of from 0.17 to 1.15 kWh/m³, and more preferably of from 0.23 to 0.83 kWh/m³; and/or
   wherein the at least one agitator (5) is a pipeline mixer, more preferably an inline disperser or a centrifugal pump; and/or
   wherein the at least one agitator (5) is not an agitator applying the rotor-stator-principle; and/or
   wherein the at least one agitator (5) does not comprise a stator being located in proximity to the rotor.
5. Method according to any one of the items 1 to 4,
   wherein the second water-soluble precursor of a coating substance is metered into the circuit at a position different to that of first water-soluble precursor of a coating substance, or
   wherein the first water-soluble precursor of a coating substance and the second water-soluble precursor of a coating substance are metered into the circuit at the same position.
6. Method according to items 1 to 5,
   wherein the second water-soluble precursor of a coating substance is metered into the circuit at a position outside the at least one vessel (1, 6) and preferably immediately upstream or downstream of the at least one agitator (5), especially in a dispersing head of an inline disperser or into the nozzle after the impeller of the inline disperser in the case the at least one agitator is carried out as inline disperser; or
   wherein the first water-soluble precursor of a coating substance and the second water-soluble precursor are added directly to the at least one vessel (1, 6).
7. Method according to any one of the items 1 to 6,
   wherein the inorganic particles comprise titanium dioxide; and/or
   wherein the inorganic particle is a pigment particle.
8. Method according to any one of the items 1 to 7,
   wherein the first water-soluble precursor of a coating substance is a silica containing precursor, preferably water glass, or an alumina containing precursor, preferably sodium aluminate.
9. Method according to any one of the items 1 to 8,
   wherein the coating process lasts between 1 to 6 hours, preferably between 2 to 4 hours in total.
10. Method according to any one of the items 1 to 9,
   wherein the circulation rate per hour is 1 to 40, preferably 2 to 35, more preferably 15 to 30; or
   wherein the circulation rate per hour is 1 to 20, preferably 1 to 15 and more preferably 2 to 10.
11. Coated inorganic particles,
   wherein the post-treatment coating of the particles is 0.1 to 20 wt.%, preferably 2 to 10 wt.% with respect to the overall weight of the inorganic particles; and/or
   wherein the sulfuric acid solubility is less than 8.0 wt.%, preferably in the range of from 0 to 8.0 wt.%, more preferably in the range of from 0.5 to 6.5 wt.%; and/or
   wherein the HMG gloss (20°) is at least 67, preferably 68, and the HMG glossy haze is below 90, and preferably below 74; and/or
   wherein the FFC value is at least 1.40; and/or
   wherein the BET is between 5 to 100 m²/g, preferably between 10 to 25 m²/g.
12. Coated inorganic particles according to item 11,
   wherein the base particles are untreated titanium dioxide particles, preferably untreated titanium dioxide pigment particles; and/or
   wherein the base particles are doped particles, preferably doped titanium particles; and/or
   wherein the coated inorganic particles are pigment particles.
13. Coated inorganic particles obtainable by the method according to items 1 to 10.
14. Coated inorganic particles according to items 11 or 12 obtainable by the method according to items 1 to 10.

## Claims

1. Method for coating inorganic particles in an aqueous suspension (2) with at least one coating substance, comprising the steps of
a) heating the aqueous suspension of inorganic particles to a temperature in the range of from 30 to 95°C;
b) adding a first water-soluble precursor of a coating substance to the aqueous suspension (2) and curing the aqueous suspension (2) in a temperature range of from 30 to 95°C at a pH in the range of from 3 to 10.5;
c) preferably adding a second water-soluble precursor of a coating substance different from the first water-soluble precursor to the aqueous suspension (2) obtained in step b) and curing the aqueous suspension (2) in a temperature range of from 30 to 95°C at a pH in the range of from 3 to 8;
d) wherein the temperature of the aqueous suspension (2) during the overall coating process is set in the range of from 30 to 95°C, and the pH of the aqueous suspension during the overall coating process is in the range of from 3.0 to 10.5;
e) wherein the aqueous suspension (2) passes during coating step b), preferably coating steps b) and c), at least one agitator (5), wherein the at least one agitator (5) provides an energy input of 1.6 kWh/m³ or less, and has a rotational speed of 5900 rpm or less; and
f) wherein the aqueous suspension (2) is circulated at least during step b), preferably during steps b) and c), by the at least one agitator (5) in a circuit (3),
wherein the circuit (3) contains the at least one agitator (5) and at least one vessel (1,6).

2. Method according to claim 1,
wherein the circuit (3) contains at least two vessels (1,6), a first vessel (1) and a second vessel (6), both being interconnected in series with each other, wherein the at least one agitator (5) is arranged downstream the first vessel (1) and the second vessel (6) is arranged downstream of the at least one agitator (5) in the circuit (3) as seen in reference to the flow direction of the aqueous suspension (2) through the circuit (3).

3. Method according to claim 1 or 2,
wherein the at least one vessel (1, 6) being a heated and agitated curing vessel.

4. Method according to any one of the claims 1 to 3,
wherein the at least one agitator (5) provides an energy input of from 0.17 to 1.15 kWh/m³; and/or
wherein the at least one agitator (5) is a pipeline mixer; and/or
wherein the at least one agitator (5) is not an agitator applying the rotor-stator-principle; and/or
wherein the at least one agitator (5) does not comprise a stator being located in proximity to the rotor.

5. Method according to any one of the claims 1 to 4,
wherein the second water-soluble precursor of a coating substance is metered into the circuit at a position different to that of first water-soluble precursor of a coating substance, or
wherein the first water-soluble precursor of a coating substance and the second water-soluble precursor of a coating substance are metered into the circuit at the same position.

6. Method according to claims 1 to 5,
wherein the second water-soluble precursor of a coating substance is metered into the circuit at a position outside the at least one vessel (1, 6); or
wherein the first water-soluble precursor of a coating substance and the second water-soluble precursor are added directly to the at least one vessel (1, 6).

7. Method according to any one of the claims 1 to 6,
wherein the inorganic particles comprise titanium dioxide; and/or
wherein the inorganic particle is a pigment particle.

8. Method according to any one of the claims 1 to 7,
wherein the first water-soluble precursor of a coating substance is a silica containing precursor or an alumina containing precursor.

9. Method according to any one of the claims 1 to 8,
wherein the coating process lasts between 1 to 6 hours in total.

10. Method according to any one of the claims 1 to 9,
wherein the circulation rate per hour is 1 to 40; or
wherein the circulation rate per hour is 1 to 20.

11. Coated inorganic particles,
wherein the post-treatment coating of the particles is 0.1 to 20 wt.% with respect to the overall weight of the inorganic particles; and/or
wherein the sulfuric acid solubility is less than 8.0 wt.%; and/or
wherein the HMG gloss (20°) is at least 67, and the HMG glossy haze is below 90; and/or
wherein the FFC value is at least 1.40; and/or
wherein the BET is between 5 to 100 m²/g.

12. Coated inorganic particles according to claim 11,
wherein the base particles are untreated titanium dioxide particles; and/or
wherein the base particles are doped particles; and/or
wherein the coated inorganic particles are pigment particles.

13. Coated inorganic particles obtainable by the method according to claims 1 to 10.

14. Coated inorganic particles according to claims 11 or 12 obtainable by the method according to claims 1 to 10.
